# EUROPÄISCHE PATENTANMELDUNG

(11) **EP 2 228 328 A2**
(43) Veröffentlichungstag der Anmeldung: **15.09.2010**
(21) Anmeldenummer: 10450039.2
(22) Anmeldetag: 12.03.2010
(51) Int. Cl.: B65G 47/31, B65G 47/84

(54) **Förderanlage**

(30) Priorität: 13.03.2009 AT 4082009
(71) Anmelder: Springer Maschinenfabrik AG, 9360 Friesach (AT)
(72) Erfinder: Roth, Heinz, 9360 Friesach (AT)
(74) Vertreter: Gibler & Poth Patentanwälte OEG

(57) **Zusammenfassung**

Bei einem Förderanlage (4) zur Förderung länglichen Stückgutes (5) im Quertransport, mit einem endlosen ersten Förderelement (1), auf welchem wenigstens ein erster Mitnehmer (11) angeordnet ist, wird zur Gewährleistbarkeit einer getakteten Stückgutausgabe in einem vorbestimmbaren Takt von ungetaktet zur Förderanlage 4 angeliefertem länglichen Stückgut 5 vorgeschlagen, dass wenigstens ein endloses zweites Förderelement (2), auf welchem wenigstens ein zweiter Mitnehmer (21) angeordnet ist, wenigstens bereichsweise in Förderrichtung (40) parallel zu dem ersten Förderelement (1) angeordnet ist, wobei eine erste Förderbewegung des ersten Förderelements (1) unabhängig von einer zweiten Förderbewegung des zweiten Förderelements (2) steuerbar ist, und wobei das erste Förderelement (1) und das zweite Förderelement (2) in einem gemeinsamen Förderbereich (44) angeordnet sind.

## Beschreibung

Die Erfindung betrifft eine Förderanlage gemäß dem Oberbegriff des Patentanspruches 1.

Bekannte Förderanlagen werden unter anderem dazu verwendet, um längliche Stückgüter von einem ersten Bearbeitungsschritt zu einem nachfolgenden zweiten Bearbeitungsschritt zu fördern, wobei in den bekannten Förderanlagen das längliche Stückgut insbesondere im Quertransport förderbar ist. Im Quertransport ist die Förderrichtung des länglichen Stückgutes quer zur Längserstreckung dieses. Bei der Bearbeitung insbesondere von länglichen Stückgütern umfassend Naturstoffe, beispielsweise Holz, insbesondere aus Naturstoffen, beispielsweise aus Holz, ist oftmals Fall, dass der erste Bearbeitungsschritt bei aufeinander folgenden länglichen Stückgütern jeweils unterschiedlich lange dauert. Nachteilig dabei ist, dass aufeinander folgende längliche Stückgüter anschließend an den ersten Bearbeitungsschritt ungetaktet den ersten Bearbeitungsschritt verlassen und dabei ungetaktet weiter gefördert werden. Bei der ungetakteten Förderung aufeinander folgender länglicher Stückgüter werden diese bei gleicher Fördergeschwindigkeit nicht jeweils in gleichem Förderabstand bzw. Zeitabstand zueinander gefördert. Dies wirkt sich allerdings nachteilig auf die darauf folgenden weiteren Bearbeitungsschritte, insbesondere einen unmittelbar darauffolgenden zweiten Bearbeitungsschritt, aus, welcher zweite Bearbeitungsschritt demnach nicht getaktet - zumindest nicht optimal kurz getaktet - ablaufen kann.

Aufgabe der Erfindung ist es daher eine Förderanlage der eingangs genannten Art anzugeben, mit welcher die genannten Nachteile vermieden werden können, mit welcher - im Vergleich zu weiteren länglichen Stückgütern - ungetaktet angefördertes längliches Stückgut mitnehmbar ist und - im Vergleich zu den weiteren länglichen Stückgütern - getaktet ausgebbar ist, wobei ein einfacher Aufbau, eine einfache Steuerbarkeit, eine hohe Flexibilität und geringe Kosten in Herstellung und Wartung der Förderanlage gewährleistet werden können.

Erfindungsgemäß wird dies durch die Merkmale des Patentanspruches 1 erreicht.

Dadurch ergibt sich der Vorteil, dass ungetaktetes längliches Stückgut einfach, schnell, zuverlässig und kostengünstig in Takt mit weiteren länglichen Stückgütern gebracht werden kann, wobei das längliche Stückgut - im Vergleich zu den weiteren länglichen Stückgütern - getaktet aus der Förderanlage ausgebbar ist. Vorteilhaft dabei ist, dass die Förderanlage einfach aufgebaut ist, und kostengünstig in Herstellung und Wartung sein kann. Vorteilhaft dabei ist, dass auch die Steuerung der Förderanlage einfach erfolgen kann. Vorteilhaft dabei ist weiters, dass die Förderanlage dabei besonders flexibel ist, wobei beispielsweise das endlose erste Förderelement und/oder das endlose zweite Förderelement einfach und kostengünstig verlängert werden können, um große Abstandunterschiede und

Zeitunterschiede ungetaktet geförderter länglicher Stückgüter ausgleichen zu können.

Die Erfindung betrifft auch einen Eintaktförderer gemäß dem Oberbegriff des Patentanspruchs 10, welcher Eintaktförderer wenigstens einen vorteilhafte Förderanlage umfasst.

Die Erfindung betrifft weiters auch ein Verfahren zum Eintakten von ungetaktet angefördertem länglichen Stückgut gemäß dem Oberbegriff des Patentanspruchs 13.

Aufgabe der Erfindung ist es daher ein Verfahren dieser Art anzugeben, mit welchem die eingangs genannten Nachteile vermieden werden können, mit welchem - im Vergleich zu weiteren länglichen Stückgütern - ungetaktetes längliches Stückgut in - im Vergleich zu weiteren länglichen Stückgütern - getakteten Zustand bringbar ist und das längliche Stückgut getaktet aus der Förderanlage ausgebbar ist, wobei das Verfahren einfach durchführbar, einfach steuerbar, flexibel und kostengünstig gewährleistet werden kann.

Erfindungsgemäß wird dies durch die Merkmale des Patentanspruches 13 erreicht.

In vorteilhafter Weise ermöglicht das vorteilhafte Verfahren die vorstehend genannten Vorteile und vorteilhaften Wirkungen, wobei insbesondere die vorteilhafte Förderanlage mit dem Verfahren betrieben werden kann.

Die Unteransprüche, welche ebenso wie die Patentansprüche 1 und 13 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben.

Dabei zeigt:
Fig. 1 die Förderanlage einer besonders bevorzugten ersten Ausführungsform und den Eintaktförderer schematisch in Seitenansicht; und
Fig. 2 die Förderanlage und den Eintaktförderer der Fig. 1 schematisch im Grundriss.

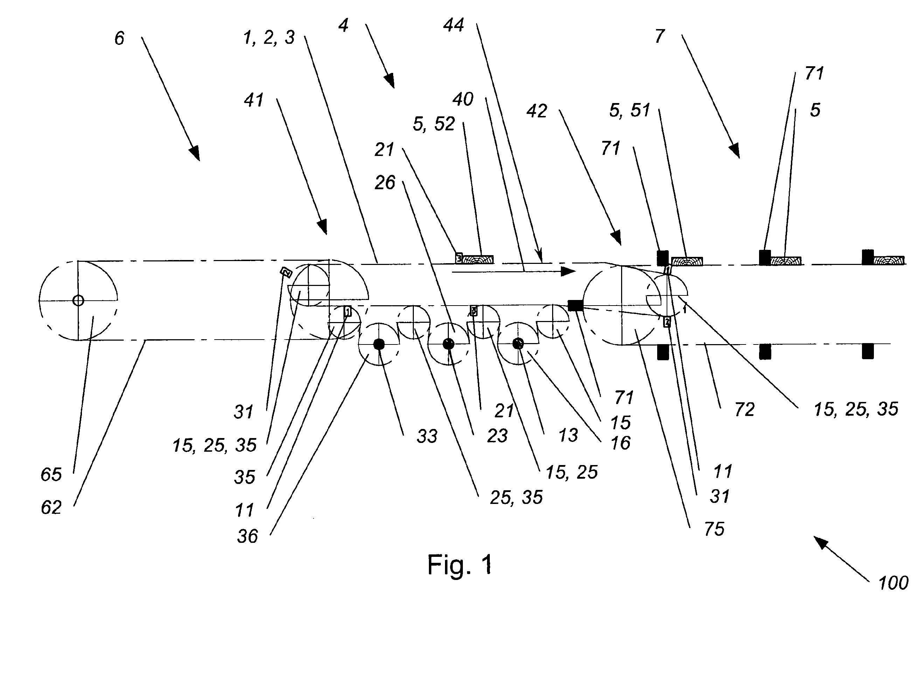

Die Fig. 1 bis 2 zeigen eine Förderanlage 4 zur Förderung länglichen Stückgutes 5 im Quertransport, mit einem endlosen ersten Förderelement 1, auf welchem wenigstens ein erster Mitnehmer 11 angeordnet ist, wobei zur Gewährleistbarkeit einer getakteten Stückgutausgabe in einem vorbestimmbaren Takt von ungetaktet zur Förderanlage 4 angeliefertem länglichen Stückgut 5 vorgeschlagen wird, dass wenigstens ein endloses zweites Förderelement 2, auf welchem wenigstens ein zweiter Mitnehmer 21 angeordnet ist, wenigstens bereichsweise in Förderrichtung 40 parallel zu dem ersten Förderelement 1 angeordnet ist, wobei eine erste Förderbewegung des ersten Förderelements 1 unabhängig von einer zweiten Förderbewegung des zweiten Förderelements 2 steuerbar ist, und wobei das erste Förderelement 1 und das zweite Förderelement 2 in einem gemeinsamen Förderbereich 44 angeordnet sind.

Vorteilhaft dabei ist, dass das längliche Stückgut 5 im Förderbereich 44 der Förderanlage 4 wahlweise vom ersten Förderelement 1 oder vom zweiten Förderelement 2 gefördert werden kann. Vorteilhaft dabei ist, dass das längliche Stückgut 5 dabei sowohl vom ersten Förderelement 1 und vom zweiten Förderelement 2 kontaktiert werden kann, wobei eines der beiden Förderelemente 1, 2 zum Gleitkontakt mit dem länglichen Stückgut 5 vorgesehen ist. Vorteilhaft dabei ist, dass der zweite Mitnehmer 21 dabei unabhängig vom ersten Mitnehmer 11 bewegbar ist, wobei der Relativabstand vom zweiten Mitnehmer 21 zum ersten Mitnehmer 11 verändert werden kann. Vorteilhaft dabei ist, dass das längliche Stückgut 5 dabei von wenigstens einem des wenigstens einen zweiten Mitnehmers 21 des endlosen zweiten Förderelements 2 mitnehmbar ist, und dass anschließend die zweite Förderbewegung des zweiten Förderelements 2 unabhängig von der ersten Förderbewegung derart steuerbar wird, so dass das längliche Stückgut 5 getaktet mit gleicher Geschwindigkeit und in vorbestimmbarem Abstand zu wenigstens einem des wenigstens einen ersten Mitnehmers 11 des endlosen ersten Förderelements 1 ausgegeben wird, während dessen das endlose erste Förderelement 1 mit einer Förderbewegung bewegt wird. Vorteilhaft dabei ist weiters, dass die Förderung mittels des endlosen ersten und zweiten Förderelements 1, 2 energieeffizient erfolgen kann, wobei die endlosen ersten und zweiten Förderelemente 1, 2 lediglich dann beschleunigt oder abgebremst werden müssen, wenn die erste Förderbewegung und/oder die zweite Förderbewegung zu beschleunigen oder abzubremsen ist. Ansonsten können die endlosen ersten und zweiten Förderelemente 1, 2 energieeffizient mit konstanter Geschwindigkeit endlos in der Förderanlage 4 laufen.

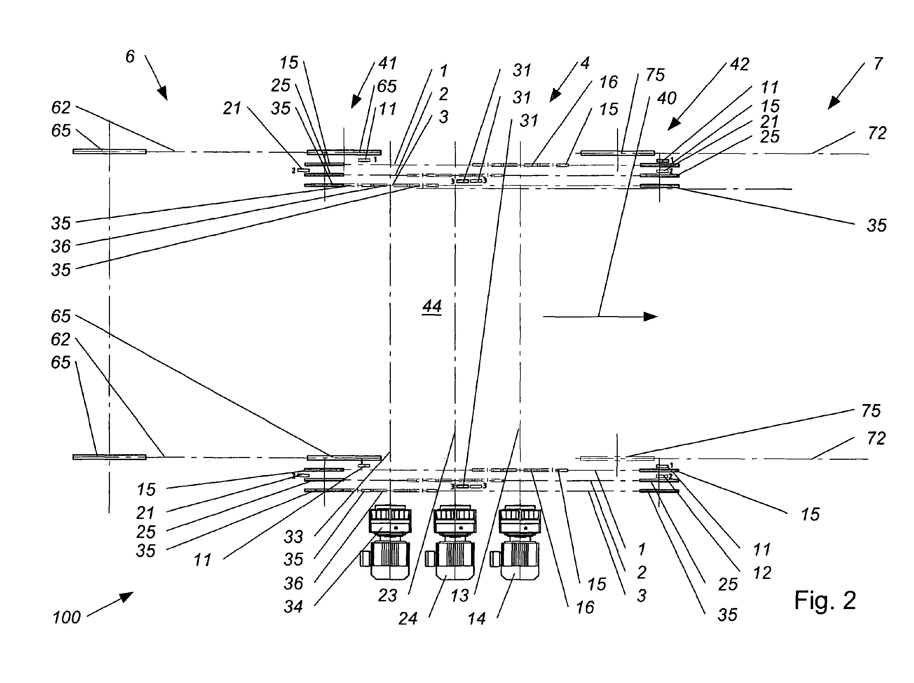

In besonders vorteilhafter Weise kann vorgesehen sein, dass jedes der Förderelemente 1, 2 jeweils genau zwei Mitnehmer 11, 21 aufweist. Bei dieser Ausführungsform der Förderelemente 1, 2 sind am ersten Förderelement 1 zwei erste Mitnehmer 11 und am zweiten Förderelement 2 zwei zweite Mitnehmer 21 angeordnet, wie dies in Fig. 1 und 2 dargestellt ist. Vorteilhaft dabei ist, dass die Abstände zwischen zwei ungetaktet zueinander angeförderter länglicher Stückgüter 5 in einem großen Bereich ausgeglichen werden können, wobei im Wesentlichen die gesamte Erstreckung des Förderbereichs 44 in Förderrichtung 40 verwendbar ist, um den Abstand zwischen zwei unmittelbar nachfolgend geförderter länglicher Stückgüter 5 zu verringern oder zu vergrößern, um die länglichen Stückgüter 5 einzutakten.

Der Förderbereich 44 ist zumindest als zusammenhängende Fläche ausgebildet und kann - wie es bei der ersten Ausführungsform der Förderanlage 4 vorgesehen ist - im Wesentlichen eben ausgebildet sein. Insbesondere kann der Förderbereich 44 im Wesentlichen horizontal angeordnet sein. Im Förderbereich 44 kann das längliche Stückgut 5 auf den ersten und zweiten Förderelementen 1, 2 im Wesentlichen zeitgleich aufliegen, wobei die ersten und zweiten Förderelemente 1, 2 insbesondere dazu vorgesehen sind, gleichzeitig das längliche Stückgut 5 zu kontaktieren. Insbesondere kann das längliche Stückgut 5 auf dem ersten

Förderelement und dem zweiten Förderelement 2 aufliegen, also aufliegend gefördert werden, wie dies bei der ersten Ausführungsform der Förderanlage 4 vorgesehen ist. Dabei ist weiters vorgesehen, dass das erste Förderelement 1 und das zweite Förderelement 2 wenigstens entlang des Förderbereichs 44 nebeneinander angeordnet sind und sich somit in der Seitenansicht decken, also in dieser Seitenansicht lediglich eines der ersten und zweiten Förderelemente 1, 2 sichtbar ist und das der andere der ersten und zweiten Förderelemente 1, 2 überdeckt wird. Dabei können die ersten und zweiten Förderelemente 1, 2 im Förderbereich 44 im Wesentlichen auf gleicher Höhe der Förderanlage 4 angeordnet sein, welche Höhe im Wesentlichen normal zur Förderrichtung 40 und normal zur Längserstreckung des länglichen Stückgutes 5 ausgebildet ist. Die ersten und zweiten Förderelemente 1, 2 können dabei in vorteilhafter Weise wenigstens im Förderbereich 44 im Wesentlichen deckungsgleich entlang der Längserstreckung des länglichen Stückgutes 5 versetzt zueinander angeordnet sein.

Das längliche Stückgut 5 kann insbesondere als Balken, als Träger, als Platte und/oder als Brett vorliegen. Das längliche Stückgut 5 kann insbesondere Naturstoffe, beispielsweise Holz, umfassen bzw. im Wesentlichen aus Naturstoffen, beispielsweise Holz, ausgebildet sein. Bevorzugt kann das längliche Stückgut 5 als Holzbalken, als Holzträger, als Holzbrett und/oder als Holzbrett ausgebildet sein. In vorteilhafter Weise kann die Förderanlage 4 dabei zur Anordnung zwischen zwei Arbeitsschritten, also einem ersten Arbeitsschritte und einem zweiten Arbeitsschritte, bei der Herstellung eines Endproduktes vorgesehen sein, wobei das längliche Stückgut 5 im Wesentlichen ungetaktet einen ersten Arbeitsschritt verlässt und im Wesentlichen getaktet dem zweiten Arbeitsschritt zugeführt werden soll.

Bei der ungetakteten Anlieferung zweier länglicher Stückgüter 5, also einem ersten länglichen Stückgut 51 und einem benachbart anschließend geförderten zweiten länglichen Stückgut 52, können im Wesentlichen drei Fälle eintreten: In Fall 1 sind der Abstand des ersten länglichen Stückgutes 51 und des zweiten länglichen Stückgutes 52 größer als der Sollabstand, welcher im Weiteren als getakteter Abstand bezeichnet wird. In Fall 2 sind der Abstand des ersten länglichen Stückgutes 51 und des zweiten länglichen Stückgutes 52 kleiner als der getaktete Abstand. In Fall 3 ist der Abstand des ersten länglichen Stückgutes 51 und des zweiten länglichen Stückgutes 52 gleich dem getakteten Abstand. Der getaktete Abstand, also der immer zwischen zwei der länglichen Stückgüter 5 gewünschte Sollabstand bedeutet hiebei, dass die beiden aufeinander folgenden länglichen Stückgüter 5 bei gleicher Fördergeschwindigkeit mit räumlichem Sollabstand beabstandet gefördert werden und mit zeitlichem Sollabstand aufeinander folgend zu einem Bearbeitungsschritt zugeführt werden können. Diese getaktete Förderung kann auch als synchrone Förderung bezeichnet werden.

In Fall 1, wobei weiters angenommen wird, dass das erste längliche Stückgut 51 in der ersten Förderbewegung getaktet gefördert wird, erfolgt die Förderung des zweiten länglichen Stückgutes 52 wie folgt: Das zweite längliche Stückgut 52 wird von wenigstens einem der zweiten Mitnehmer 21 erfasst, wie dies schematisch in Fig. 1 dargestellt ist. Während das zweite längliche Stückgut 52 entlang des Förderbereichs 44 der Förderanlage 4 gefördert wird, wird es mit der zweiten Förderbewegung näher an den ersten Mitnehmer 11 herangefördert und somit näher an das erste längliche Stückgut 51 herangefördert, wobei die zweite Förderbewegung unter höherer Geschwindigkeit als die erste Förderbewegung erfolgt. Sobald der Abstand vom ersten länglichen Stückgut 51 zum zweiten länglichen Stückgut 52 dem getakteten Abstand entspricht, wird die Geschwindigkeit der zweiten Förderbewegung auf die Geschwindigkeit der ersten Förderbewegung abgesenkt, womit die erste Förderbewegung und die zweite Förderbewegung bei gleicher Geschwindigkeit erfolgen. Dabei werden das erste längliche Stückgut 51 und das zweite längliche Stückgut 52 getaktet zueinander gefördert, wobei diese getaktete Förderung umfasst, dass diese beiden länglichen Stückgüter 5 bei gleicher Fördergeschwindigkeit und in vorbestimmbaren Sollabstand zueinander gefördert werden. Der Förderbereich 44 der Förderanlage 4 ist jener Bereich der Förderanlage 4, in welchem die Förderanlage 4 beim Fördern des länglichen Stückgutes 5 mit diesem zusammenwirkt und kann somit im Weiteren als zweiter Wirkungsbereich bezeichnet werden. Wenn das zweite längliche Stückgut 52 einen Anlieferbereich 41 der Förderanlage 4 passiert, ist - gemäß Fall 1 - der Abstand zum ersten länglichen Stückgut 51 größer, als wenn das zweite längliche Stückgut 52 einen Ausgabebereich 42 der Förderanlage 4 passiert.

In Fall 2, wobei weiters angenommen wird, dass das erste längliche Stückgut 51 in erste Förderbewegung getaktet gefördert wird, erfolgt die Förderung des zweiten länglichen Stückgutes 52 wie folgt: Das zweite längliche Stückgut 52 wird von wenigstens einem der zweiten Mitnehmer 21 erfasst und wird entlang des zweiten Wirkungsbereichs mit der zweiten Förderbewegung langsamer als der erste Mitnehmer 11 gefördert, womit sich der Abstand zwischen erstem länglichen Stückgut 51 und zweitem länglichen Stückgut 52 zusehends vergrößert. Die zweite Förderbewegung erfolgt dabei bei niedrigerer Geschwindigkeit als die erste Förderbewegung. Sobald der Abstand von erstem länglichen Stückgut 51 zum zweiten länglichen Stückgut 52 dem getakteten Abstand entspricht wird die Geschwindigkeit der zweiten Förderbewegung auf die Geschwindigkeit der ersten Förderbewegung angehoben, womit die erste Förderbewegung und die zweite Förderbewegung bei gleicher Geschwindigkeit erfolgen und womit das erste längliche Stückgut 51 und das zweite längliche Stückgut 52 getaktet zueinander gefördert werden. Wenn das zweite längliche Stückgut 52 den Anlieferbereich 41 passiert, ist - gemäß Fall 2 - der Abstand zum ersten länglichen Stückgut 51 kleiner, als wenn das zweite längliche Stückgut 52 den Ausgabebereich 42 passiert.

In Fall 3, wobei weiters angenommen wird, dass das erste längliche Stückgut 51 in erste Förderbewegung getaktet gefördert wird, erfolgt die Förderung des zweiten länglichen Stückgutes 52 wie folgt: Da das zweite längliche Stückgut 52 bereits im Sollabstand den Anlieferbereich 41 passiert, wird das längliche Stückgut 52 von wenigstens einem der zweiten Mitnehmer 21 erfasst und wird entlang des zweiten Wirkungsbereichs mit der zweiten Förderbewegung mit gleicher Geschwindigkeit als der erste Mitnehmer 11 gefördert. Derart sind das zweite längliche Stückgut 52 und das erste längliche Stückgut 51 bereits im Wesentlichen bereits getaktet zueinander, wenn das zweite längliche Stückgut 52 den Anlieferbereich 41 passiert und diese Taktung wird beibehalten, womit das zweite längliche Stückgut 52 und das erste längliche Stückgut 51 auch getaktet gefördert werden, wenn das zweite längliche Stückgut 52 den Ausgabebereich 42 passiert.

Diese drei Fälle können in vorteilhafter Weise mit einem Verfahren zum Eintakten von ungetaktet angefördertem länglichen Stückgut 5 abgedeckt werden, bei welchem Verfahren vorgesehen ist, dass das längliche Stückgut 5 von wenigstens einem zweiten Mitnehmer 21 eines endlosen zweiten Förderelements 2 mitgenommen wird, dass anschließend eine zweite Förderbewegung des zweiten Förderelements 2 unabhängig von einer ersten Förderbewegung wenigstens eines ersten Förderelements 1 derart gesteuert wird, dass nachdem ein erster Mitnehmer 11 des ersten Förderelements 1 einen Ausgabebereich 42 der Förderanlage 4 passiert getaktet mit vorbestimmbarem Zeitabstand der zweite Mitnehmer 21 den Ausgabebereich 42 der Förderanlage 4 passiert. Dabei ist vorgesehen, dass der erste Mitnehmer 11 des endlosen ersten Förderelements 1 der Förderanlage 4 den Ausgabebereich 42 der Förderanlage 4 in der ersten Förderbewegung passiert und dass anschließend die zweite Förderbewegung des zweiten Förderelements 2 unabhängig von einer ersten Förderbewegung des ersten Förderelements 1 derart gesteuert wird, dass der zweite Mitnehmer 21 den Ausgabebereich 42 nach einem vorbestimmbarem Zeitabstand getaktet zum ersten Mitnehmer 11 passiert. Beim Eintakten werden zwei aufeinanderfolgend geförderte der länglichen Stückgüter 5, welche ursprünglich ungetaktet zueinander geförderte werden, zueinander in Takt gebracht. Dies kann auch als Synchronisation, also die Abstimmung, der Förderung der jeweils aufeinanderfolgend geförderten länglichen Stückgüter 5 bezeichnet werden.

Die drei Fälle können in vorteilhafter Weise weiters abgedeckt werden, wenn eine Anförderinformation des ungetaktet angeförderten länglichen Stückgutes 5 ermittelt wird, und wenn basierend auf der Anförderinformation die zweite Förderbewegung derart unabhängig von der ersten Förderbewegung gesteuert wird, dass in einem Anlieferbereich 41 der Förderanlage 4 das ungetaktet angeförderte längliche Stückgut 5 unmittelbar vom zweiten Mitnehmer 21 mitgenommen wird. In vorteilhafter Weise kann die Anförderinformation von einem Sensor zur Ermittelung der Anförderinformation des länglichen Stückgutes 5 ermittelt werden. Der Sensor kann in vorteilhafter Weise - zur Steuerung der Förderbewegungen, insbesondere der ersten Förderbewegung und der zweiten Förderbewegung, mit einer Steuereinrichtung der voneinander unabhängigen Antriebe der endlosen Förderelemente, insbesondere des ersten Förderelements 1 und des zweiten Förderelements 2, verbunden sein. Der Sensor kann dazu - in Förderrichtung 40 des länglichen Stückgutes 5 gesehen - vor dem Anlieferbereich 41 angeordnet sein.

In vorteilhafter Weise kann vorgesehen sein, dass die Förderanlage 4 jeweils zwei zueinander parallele und zueinander beabstandete erste Förderelemente 1 und zwei zueinander parallel und zueinander beabstandete zweite Förderelemente 2 umfasst, wie dies gemäß der ersten Ausführungsform der Förderanlage vorgesehen ist und im in Fig. 2 dargestellten Grundriss dargestellt ist. Derart kann vorgesehen sein, dass das längliche Stückgut 5 im Quertransport transportiert wird, wobei das längliche Stückgut 5 eine Längserstreckung aufweist, welche im Wesentlichen normal zur Förderrichtung 40 gerichtet ist. Derart ist die Förderanlage 4 zum Quertransport des länglichen Stückgutes 5 vorgesehen. Vorteilhaft dabei ist, dass das längliche Stückgut 5 dabei jeweils an dessen Längsenden, insbesondere im Wesentlichen lediglich an dessen Längsenden, auf den ersten und zweiten Förderelementen 1, 2 aufliegt. Vorteilhaft dabei ist, dass die Förderanlage 4 dabei einfach, materialschonend, gewichtsschonend und kosten günstig aufgebaut werden kann. Vorteilhaft dabei ist, dass wenig Masse der Förderanlage 4 bewegt werden kann, womit die Förderung besonders energieeffizient erfolgen kann und das längliche Stückgut 5 einfach und energieeffizient beschleunigt bzw. verzögert werden kann. Dies kann insbesondere vorgesehen sein, wenn das längliche Stückgut 5 balkenförmig und/oder brettförmig vorliegt und kann insbesondere in der holzverarbeiteten Industrie vorteilhaft sein.

In vorteilhafter Weiterbildung kann vorgesehen sein, dass am ersten Förderelement 1 wenigstens zwei erste Mitnehmer 11 angeordnet sind, und dass am zweiten Förderelement 2 wenigstens zwei zweite Mitnehmer 21 angeordnet sind, wie dies bei der ersten Ausführungsform der Förderanlage 4 vorgesehen ist. Dadurch kann die Flexibilität der Förderanlage 4 besonders hoch sein. Vorteilhaft dabei ist insbesondere, dass dabei ein zweites der wenigstens zwei ersten Mitnehmer 11 im Wesentlichen unmittelbar in den zweiten Wirkungsbereich eintreten kann, wenn ein erstes der wenigstens zwei ersten Mitnehmer aus dem zweiten Wirkungsbereiche heraustritt. Identisch gilt dies auch für ein erstes und ein zweites der wenigstens zwei zweiten Mitnehmer 21. Vorteilhaft dabei ist, dass das erste Förderelement 1 und das zweite Förderelement 2 weniger oft und insbesondere weniger stark beschleunigt und verzögert werden müssen, womit eine besonders hohe Energieeffizienz der Förderanlage 4 gewährleistet werden kann.

Insbesondere kann vorgesehen sein, dass die Förderanlage 4 eine erste Antriebswelle 13 zum Antreiben des ersten Förderelements 1 umfasst, und dass die Förderanlage 4 eine zweite Antriebswelle 23 zum Antreiben des zweiten Förderelements 2 umfasst, wie dies ebenfalls bei der ersten Ausführungsform der Förderanlage 4 vorgesehen ist. Die Welle kann sich dabei auch zwischen zwei jeweils zueinander beabstandeten und zueinander parallelen ersten Förderelementen 1 und zweiten Förderelementen 2 erstrecken und kann dabei die derart jeweils eine zusammengehörige erste Gruppe erster Förderelemente 1 und zweite Gruppe zweiter Förderelemente 2 einfach und gleichartig antreiben. In diesem Zusammenhang kann insbesondere vorgesehen sein, dass die erste Antriebswelle 13 mit einem ersten Motor 14 verbunden ist, und dass die zweite Antriebswelle 23 mit einem zweiten Motor 24 verbunden ist. Die Motoren können dabei individuell und unabhängig voneinander gesteuert und geregelt werden, wobei im Sinne der Erfindung steuern und regeln als gleichwertig angesehen werden.

Besonders einfach, gewichtsschonend und kostengünstig können das erste Förderelement 1 und das zweite Förderelement 2 ausgebildet sein, wenn das erste Förderelement 1 und das zweite Förderelement 2 als Förderband oder als Förderkette ausgebildet sind. Dies wirkt sich weiters auch vorteilhaft auf die Energieeffizienz der Förderanlage 4 aus.

In vorteilhafter Weise kann ebenso vorgesehen sein, dass das erste Förderelement 1 und das zweite Förderelement 2 im Wesentlichen identisch ausgebildet sind, wie dies bei der ersten Ausführungsform der Förderanlage 4 vorgesehen ist. Dabei können standardisierte Förderelemente verwendet werden und die Ersatzteilelagerung vereinfacht werden. Insbesondere kann dabei die Umlauflänge des ersten Förderelementes 1 und des zweiten Förderelementes 2 im Wesentlichen identisch sein.

Damit eine besonders hohe Flexibilität der Förderanlage 4 gewährleistet werden kann, kann vorgesehen sein, dass wenigstens ein endloses drittes Förderelement 3, auf welchem wenigstens ein dritter Mitnehmer 31 angeordnet ist, wenigstens bereichsweise in Förderrichtung 40 parallel zu dem ersten Förderelement 1 angeordnet ist, wobei eine dritte Förderbewegung des dritten Förderelements 3 unabhängig von der ersten Förderbewegung und der zweiten Förderbewegung steuerbar ist. Dabei kann insbesondere vorgesehen sein, dass das dritte Förderelement 3 äquivalent zum zweiten Förderelement 2 ausgebildet und/oder angeordnet ist. In diesem Sinne können das dritte Förderelement 3 und das zweite Förderelement 2 austauschbar bezeichnet werden. In diesem Sinne kann das dritte Förderelement 3, insbesondere die dritte Gruppe dritter Förderelemente 3, als zweites zweites Förderelement 2 angesehen werden, insbesondere als zweite zweite Gruppe. Insbesondere können das erste Förderelement 1, das zweite Förderelement 2 und das dritte Förderelement 3, insbesondere die erste Gruppe, die zweite Gruppe und die dritte Gruppe, jeweils äquivalent zueinander sein. Gemäß der ersten Ausführungsform der Förderanlage ist beispielsweise vorgesehen, dass die Förderanlage drei zueinander äquivalente Gruppen von jeweils zwei endlosen Förderelementen 1, 2, 3 umfasst, wobei jede der drei Gruppen als erste Gruppe, als zweite Gruppe oder als dritte Gruppe bezeichnet werden kann und sich die Nummerierung der weiteren der drei Gruppen entsprechend anpasst.

Das längliche Stückgut 5 wird im Ausgabebereich 42 der Förderanlage 4 ausgegeben.

Die vorstehend beschriebene vorteilhafte Förderanlage 4 kann insbesondere von einem Eintaktförderer 100 zum Eintakten von in unterschiedlichem Takt angefördertem länglichen Stückgutes 5 umfasst sein, wobei die Eintaktanlage 100 einen Übernahmeförderer 6 zum ungetakteten Anliefern des länglichen Stückgutes 5, wenigstens eine Förderanlage 4 und einen Mitnehmerförderer 7 zum getakteten Abtransport des länglichen Stückgutes 5 umfasst. Dieser vorteilhafte Eintaktförderer 100 ist in einer besonders bevorzugten ersten Ausführungsform ebenfalls in Fig. 1 und 2 im Seitenriss und im Grundriss dargestellt. Das längliche Stückgut 5 kann dabei ungetaktet vom Übernahmeförderer 6 - insbesondere im Quertransport - in Förderrichtung 40 zu Förderanlage 4 angeliefert werden. Die Förderanlage 4 kann - wie vorstehend beschrieben - die Taktung hintereinander geförderter länglicher Stückgüter 5 gewährleisten. Der Mitnehmerförderer 7 kann anschließend die nunmehr getakteten länglichen Stückgüter 5 getaktet aufnehmen und getaktet weiterfördern, insbesondere im Quertransport. Derart kann das längliche Stückgut 5 insbesondere getaktet einem der Eintaktförderer 100 nachfolgendem Bearbeitungsschritt zugeführt werden. Der nachfolgende Bearbeitungsschritt kann dabei bevorzugt eine Behandlung und/oder Bearbeitung des länglichen Stückgutes 5 oder insbesondere ein Zusammenbau des länglichen Stückgutes 5 mit weiteren Bauteilen und/oder insbesondere ein Verpackungsschritt des länglichen Stückgutes 5.

In diesem Zusammenhang kann in vorteilhafter Weise vorgesehen sein, dass ein erster Wirkungsbereich des Übernahmeförderers 6 und der zweite Wirkungsbereich der Förderanlage 4 einander in einem Anlieferbereich 41 der Förderanlage 4 überlappen, und dass der zweite Wirkungsbereich der Förderanlage 4 und ein dritter Wirkungsbereich des Mitnehmerförderers 7 einander in einem Ausgabebereich 42 der Förderanlage 4 überlappen. Der erste Wirkungsbereich ist dabei jener Bereich des Übernahmeförderers 6, welcher zu Förderung des länglichen Stückgutes 5, insbesondere in Förderrichtung 40, vorgesehen ist. Der zweite Wirkungsbereich ist dabei jener Bereich der Förderanlage 4, welcher zu Förderung des länglichen Stückgutes 5, insbesondere in Förderrichtung 40, vorgesehen ist. Der dritte Wirkungsbereich ist dabei jener Bereich des Mitnehmerförderers 7, welcher zu Förderung des länglichen Stückgutes 5, insbesondere in Förderrichtung 40, vorgesehen ist.

Der Eintaktförderer 100 kann besonders einfach, materialschonend und energieeffizient ausgebildet sein, wozu vorgesehen sein kann, dass der Übernahmeförderer 6 wenigstens ein endloses Übernahmefördererelement 62 umfasst, dass der Mitnehmerförderer 7 wenigstens ein endloses Mitnehmerfördererelement 72 umfasst, dass das Übernahmefördererelement 62 in Förderrichtung 40 parallel zu dem ersten Förderelement 1 angeordnet ist, und dass das Mitnehmerfördererelement 72 in Förderrichtung 40 parallel zu dem ersten Förderelement 1 angeordnet ist. In diesem Zusammenhang kann in vorteilhafter Weise vorgesehen sein, dass das endlose Übernahmefördererelement 62 mittels einer vierten Antriebswelle angetrieben werden kann, wobei die vierte Antriebswelle insbesondere mit einem unabhängig der weiteren Motoren steuerbaren und/oder regelbaren vierten Motor verbunden sein kann. In diesem Zusammenhang kann in vorteilhafter Weise vorgesehen sein, dass das endlose Mitnehmerfördererelement 72 mittels einer fünften Antriebswelle angetrieben werden kann, wobei die fünfte Antriebswelle insbesondere mit einem unabhängig der weiteren Motoren steuerbaren und/oder regelbaren fünften Motor verbunden sein kann.

In diesem Zusammenhang kann vorgesehen sein, dass die Anförderinformation des länglichen Stückgutes 5 vom Übernahmeförderer 6 bestimmt wird und an die Steuereinrichtung zur Steuerung der Förderbewegungen, insbesondere der ersten Förderbewegungen, der zweiten Förderbewegung und der dritten Förderbewegung übermittelt wird. Hiezu kann der Übernahmeförderer 6 einen dementsprechenden Sensor umfassen.

Insbesondere kann vorgesehen sein, dass erste Mitnehmer 11 und zweite Mitnehmer 11 beim Passieren des Ausgabebereichs 42 mit derselben Geschwindigkeit wie das endlose Mitnehmerfördererelement 72 des Mitnehmerförderers 7 bewegt werden. Vorteilhaft dabei ist, dass das längliche Stückgut 5 bei dessen Übergabe von der Förderanlage 4 an den Mitnehmerförderer 7 im Wesentlichen unbeschleunigt und - zumindest in die Förderrichtung 40 - mit konstanter Fördergeschwindigkeit gefördert wird. Vorteilhaft dabei ist, dass derart die Förderung besonders stückgutschonend und besonders energieeffizient erfolgen kann.

In Weiterbildung der Erfindung kann vorgesehen sein, dass anstatt erstem, zweitem und drittem Motor 14, 24, 34 lediglich ein Gesamtmotor vorgesehen ist und die erste, die zweite und die dritte Antriebswelle 13, 23, 33 derart unabhängig voneinander antreibbar sind, dass jeder der Wellen mittels eines variablen Getriebes und einer Kupplungseinrichtung mit dem Motor verbunden sind. Vorteilhaft dabei ist, dass der Gesamtmotor dabei mit konstanter Geschwindigkeit betrieben werden kann und die jeweiligen Rotationsgeschwindigkeiten der ersten, der zweiten und der dritten Antriebswelle 13, 23, 33 dennoch unabhängig und individuell vorbestimmbar gesteuert und geregelt werden können.

In vorteilhafter Weise kann mit der ersten Antriebswelle 13 wenigstens ein erstes Antriebsrad 16 verbunden sind, wobei das erste Antriebsrad 36 das erste Förderelement 1 kontaktiert. Wenn die erste Gruppe erster Förderelemente 1 ausgebildet ist, dann können insbesondere mehrere erste Antriebsräder 16 parallel zueinander und beabstandet zueinander an der ersten Antriebswelle 13 angeordnet sein, wie dies gemäß der ersten Ausführungsform der Förderanlage 4 vorgesehen ist. Gleichwertig gilt dies auch für wenigstens ein an der zweiten Antriebswelle 23 angeordnetes zweites Antriebsrad 26 sowie für wenigstens ein an der dritten Antriebswelle 33 angeordnetes drittes Antriebsrad 36. Die Förderanlage 4 kann weiters erste Führungsräder 15 zum Führen des ersten Förderelementes 1 umfassen. Die Förderanlage 4 kann weiters zweite Führungsräder 25 zum Führen des zweiten Förderelementes 2 umfassen. Die Förderanlage 4 kann weiters dritte Führungsräder 35 zum Führen des zweiten Förderelementes 3 umfassen. Dadurch können der Antrieb und die Führung des ersten Förderelementes 1, des zweiten Förderelementes 2 und des dritten Förderelementes 3 besonders einfach und zuverlässig erfolgen. Wenn die erste Gruppe erster Förderelemente 1 ausgebildet ist, kann vorgesehen sein, dass jeweils eine Gruppe erster Führungsräder 15 entlang einer im Wesentlichen freilaufenden Achse angeordnet sein können, wie dies bei der ersten Ausführungsform der Förderanlage 4 vorgesehen ist.

In diesem Zusammenhang kann eine erste Spanneinrichtung zum Spannen des ersten Förderelementes 1 vorgesehen sein. In diesem Zusammenhang kann weiters eine zweite Spanneinrichtung zum Spannen des zweiten Förderelementes 2 vorgesehen sein. In diesem Zusammenhang kann weiters eine dritte Spanneinrichtung zum Spannen des dritten Förderelementes 3 vorgesehen sein. Vorteilhaft dabei ist, dass das erste Förderelement 1, das zweite Förderelement 2 und/oder das dritte Förderelement 3 im Wesentlichen dauerhaft mit gleicher Spannkraft gespannt werden kann, womit der zuverlässige endlose Lauf des ersten Förderelementes 1, des zweiten Förderelementes 2 und/oder des dritten Förderelementes 3 gewährleistet werden kann. Auch der Übernahmeförderer 6 kann vierte Führungsräder 65 und gegebenenfalls eine vierte Spanneinrichtung umfassen. Auch der Mitnehmerförderer 7 kann fünfte Führungsräder 75 und gegebenenfalls eine fünfte Spanneinrichtung umfassen.

Insbesondere kann - wie dies bei der ersten Ausführungsform des Eintaktförderers 100 vorgesehen ist - vorgesehen sein, dass entlang des endlosen Mitnehmerfördererelementes 72 jeweils gleich beabstandet mehrere fünfte Mitnehmer 71 angeordnet sind. Diese fünften Mitnehmer 71 sind vorgesehen um das längliche Stückgut 5, welches den Ausgabebereich 42 der Förderanlage 4 getaktet passiert, getaktet mitzunehmen und das längliche Stückgut 5 zuverlässig getaktet weiter zu fördern. Auch der Übernahmeförderer 6 kann vierte Mitnehmer umfassen, wobei gemäß der ersten Ausführungsform des Eintaktförderers 100 keine vierte Mitnehmer vorgesehen sind, da diese bei der ungetakteten Förderung gegebenenfalls hinderlich sein können.

In vorteilhafter Weiterbildung der Förderanlage 4 kann vorgesehen sein, dass das erste Förderelement 1 eine Gleitoberfläche aufweist. In vorteilhafter Weiterbildung kann vorgesehen sein, dass das zweite Förderelement 2 eine Gleitoberfläche aufweist. In vorteilhafter Weiterbildung kann vorgesehen sein, dass das dritte Förderelement 3 eine Gleitoberfläche aufweist. Vorteilhaft dabei ist, dass das bei unterschiedlicher erster zweiter und dritter Förderbewegung die jeweiligen ersten, zweiten und/oder dritten Förderelemente 1, 2, 3 einfach am länglichen Stückgut 5 entlang gleiten kann, womit Schleifspuren am länglichen Stückgut 5 vermieden werden können und die Energieeffizienz beim Eintakten der länglichen Stückgüter 5 hoch sein kann.

Gemäß einer weiteren - nicht dargestellten - Weiterbildung der Förderanlage 4 kann vorgesehen sein, dass der erste Mitnehmer 11 derart als erste Mitnehmertasche ausgebildet sind, dass das längliche Stückgut 5 - in Förderrichtung 40 gesehen - von hinten und von vorne von abragenden Schenkeln der ersten Mitnehmertasche einschließbar ist. Vorteilhaft dabei ist, dass das längliche Stückgut 5 dabei besonders zuverlässig sowohl schneller bzw. als auch langsamer entlang des zweiten Wirkbereichs als weitere von der Förderanlage 4 geförderte längliche Stückgüter 5 gefördert werden kann. Damit kann die Taktung mehrerer länglicher Stückgüter 5 zueinander mit besonders hoher Präzision, besonders schnell und besonders zuverlässig erfolgen. In diesem Sinne kann auch der zweite Mitnehmer 21 als zweite Mitnehmertasche ausgebildet sein. In diesem Sinne kann auch der dritte Mitnehmer 31 als dritte Mitnehmertasche ausgebildet sein.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Förderanlage (4) zur Förderung länglichen Stückgutes (5) im Quertransport, mit einem endlosen ersten Förderelement (1), auf welchem wenigstens ein erster Mitnehmer (11) angeordnet ist, **dadurch gekennzeichnet, dass** wenigstens ein endloses zweites Förderelement (2), auf welchem wenigstens ein zweiter Mitnehmer (21) angeordnet ist, wenigstens bereichsweise in Förderrichtung (40) parallel zu dem ersten Förderelement (1) angeordnet ist, wobei eine erste Förderbewegung des ersten Förderelements (1) unabhängig von einer zweiten Förderbewegung des zweiten Förderelements (2) steuerbar ist, und wobei das erste Förderelement (1) und das zweite Förderelement (2) in einem gemeinsamen Förderbereich (44) angeordnet sind.

2. Förderanlage nach Anspruch 1, **dadurch gekennzeichnet, dass** am ersten Förderelement (1) wenigstens zwei erste Mitnehmer (11) angeordnet sind, und dass am zweiten Förderelement (2) wenigstens zwei zweite Mitnehmer (21) angeordnet sind.

3. Förderanlage nach Anspruch 1 oder 2, **dadurch gekennzeichnet, dass** die Förderanlage (4) eine erste Antriebswelle (13) zum Antreiben des ersten Förderelements (1) umfasst, und dass die Förderanlage (4) eine zweite Antriebswelle (23) zum Antreiben des zweiten Förderelements (2) umfasst.

4. Förderanlage nach Anspruch 3, **dadurch gekennzeichnet, dass** die erste Antriebswelle (13) mit einem ersten Motor (14) verbunden ist, und dass die zweite Antriebswelle (23) mit einem zweiten Motor (24) verbunden ist.

5. Förderanlage nach einem der Ansprüche 1 bis 4, **dadurch gekennzeichnet, dass** die Förderanlage (4) zum Quertransport des länglichen Stückgutes (5) vorgesehen ist.

6. Förderanlage nach einem der Ansprüche 1 bis 5, **dadurch gekennzeichnet, dass** die Förderanlage (4) zumindest zwei endlose erste Förderelemente (1) und zumindest zwei endlose zweite Förderelemente (2) umfasst.

7. Förderanlage nach einem der Ansprüche 1 bis 6, **dadurch gekennzeichnet, dass** das erste Förderelement (1) und das zweite Förderelement (2) als Förderband oder als Förderkette ausgebildet sind.

8. Förderanlage nach einem der Ansprüche 1 bis 7, **dadurch gekennzeichnet, dass** das erste Förderelement (1) und das zweite Förderelement (2) im Wesentlichen identisch ausgebildet sind.

9. Förderanlage nach einem der Ansprüche 1 bis 8, **dadurch gekennzeichnet, dass** wenigstens ein endloses drittes Förderelement (3), auf welchem wenigstens ein dritter Mitnehmer (31) angeordnet ist, wenigstens bereichsweise in Förderrichtung (40) parallel zu dem ersten Förderelement (1) angeordnet ist, wobei eine dritte Förderbewegung des dritten Förderelements (3) unabhängig von der ersten Förderbewegung und der zweiten Förderbewegung steuerbar ist.

10. Eintaktförderer (100) zum Eintakten von in unterschiedlichem Takt angeförderten länglichen Stückgutes (5), wobei die Eintaktanlage (100) einen Übernahmeförderer (6) zum ungetakteten Anliefern des länglichen Stückgutes (5), wenigstens eine Förderanlage (4) und einen Mitnehmerförderer (7) zum getakteten Abtransport des länglichen Stückgutes (5) umfasst, **dadurch gekennzeichnet, dass** die Förderanlage (4) nach einem der Ansprüche 1 bis 9 ausgebildet ist.

11. Eintaktförderer (100) nach Anspruch 10, **dadurch gekennzeichnet, dass** ein erster Wirkungsbereich des Übemahrneförderers (6) und ein zweiter Wirkungsbereich der Förderanlage (4) einander in einem Anlieferbereich (41) der Förderanlage (4) überlappen, und dass der zweite Wirkungsbereich der Förderanlage (4) und ein dritter Wirkungsbereich des Mitnehmerförderers (7) einander in einem Ausgabebereich (42) der Förderanlage (4) überlappen.

12. Eintaktförderer (100) nach Anspruch 10 oder 11, **dadurch gekennzeichnet, dass** der Übernahmeförderer (6) wenigstens ein endloses Übernahmefördererelement (62) umfasst, dass der Mitnehmerförderer (7) wenigstens ein endloses Mitnehmerfördererelement (72) umfasst, dass das Übernahmefördererelement (62) in Förderrichtung (40) parallel zu dem ersten Förderelement (1) angeordnet ist, und dass das Mitnehmerfördererelement (72) in Förderrichtung (40) parallel zu dem ersten Förderelement (1) angeordnet ist.

13. Verfahren zum Eintakten von ungetaktet angefördertem länglichen Stückgut (5), **dadurch gekennzeichnet, dass** das längliche Stückgut (5) von wenigstens einem zweiten Mitnehmer (21) eines endlosen zweiten Förderelements (2) mitgenommen wird, dass anschließend eine zweite Förderbewegung des zweiten Förderelements (2) unabhängig von einer ersten Förderbewegung wenigstens eines ersten Förderelements (1) derart gesteuert wird, dass nachdem ein erster Mitnehmer (11) des ersten Förderelements (1) einen Ausgabebereich (42) der Förderanlage (4) passiert getaktet mit vorbestimmbarem Zeitabstand der zweite Mitnehmer (21) den Ausgabebereich (42) der Förderanlage (4) passiert.

14. Verfahren nach Anspruch 13, **dadurch gekennzeichnet, dass** eine Anförderinformation des ungetaktet angeförderten länglichen Stückgutes (5) ermittelt wird, und dass basierend auf der Anförderinformation die zweite Förderbewegung derart unabhängig von der ersten Förderbewegung gesteuert wird, dass in einem Anlieferbereich (41) der Förderanlage (4) das ungetaktet angeförderte längliche Stückgut (5) unmittelbar vom zweite Mitnehmer (21) mitgenommen wird.

15. Verfahren nach Anspruch 13 oder 14, **dadurch gekennzeichnet, dass** der erste Mitnehmer (11) und der zweite Mitnehmer (21) beim Passieren des Ausgabebereichs (42) mit derselben Geschwindigkeit wie ein endloses Mitnehmerfördererelement (72) eines Mitnehmerförderers (7) bewegt werden.
